# EUROPEAN PATENT SPECIFICATION

(11) **EP 2 481 257 B1**
(45) Date of publication and mention of the grant of the patent: **12.01.2022**
(21) Application number: 10824337.9
(22) Date of filing: 21.09.2010
(51) Int. Cl.: H04W 88/10, H04W 72/04, H04L 5/00, H04L 27/26, H04L 25/02, H04W 88/06, H04W 72/00

(54) **REFERENCE SIGNAL DESIGN FOR DOWNLINK HIGH-ORDER MIMO**
REFERENZSIGNALGESTALTUNG FÜR DOWNLINK-MIMO HOHER ORDNUNG
CONCEPTION DE SIGNAUX DE RÉFÉRENCE POUR MIMO D'ORDRE ÉLEVÉ EN LIAISON DESCENDANTE

(30) Priority: 21.09.2009 US 244130 P
(43) Date of publication of application: 01.08.2012
(73) Proprietor: BlackBerry Limited, Waterloo, ON N2K 0A7 (CA)
(72) Inventor: XU, Hua, Nepean, Ontario K2G 6C2 (CA); MA, Jianglei, Kanata, Ontario K2M 2W5 (CA); YU, Dong-Sheng, Ottawa, Ontario K2M 2W5 (CA); JIA, Ming, Ottawa, Ontario K2A 0B3 (CA); COLLARD, Aaron, Ottawa, Ontario K2B 7C4 (CA); BALIGH, Mohammadhadi, Kanata, Ontario K2M 0B1 (CA)
(74) Representative: Murgitroyd & Company
(86) International application number: PCT/CA2010/001507
(87) International publication number: WO 2011/047462

(56) References cited:
- EP-A1- 1 855 424
- WO-A1-2009/110821
- US-A1- 2007 217 531
- US-A1- 2008 316 977
- NORTEL: "Design Aspect for Higher-order MIMO in LTE-advanced", 3GPP DRAFT; R1-090144(NORTEL-DESIGNASPECT HIGHERORDER MIMO IN LTE-A), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090107, 7 January 2009 (2009-01-07), XP050318080, [retrieved on 2009-01-07]
- NEC GROUP: "CQI-RS for LTE-Advanced", 3GPP DRAFT; R1-091221-CQI-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090319, 19 March 2009 (2009-03-19), XP050338836, [retrieved on 2009-03-19]
- ZTE CORPORATION: "DL Reference Signal Design for CSI generation in LTE-Advanced", 3GPP DRAFT; R1-093196 DL REFERENCE SIGNAL DESIGN FOR CSI GENERATION IN LTE-ADVANCED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090819, 19 August 2009 (2009-08-19), XP050351549, [retrieved on 2009-08-19]
- MOTOROLA: "Downlink RS Design for Supporting Higher Order SU/MU-MIMO and CoMP", 3GPP DRAFT; R1-090796 RS DESIGN FOR LTE-A (MOTOROLA), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318653, [retrieved on 2009-02-03]
- ZYREN J. ET AL.: 'Overview of the 3GPP Long Term Evolution Physical Layer' WHITER PAPER July 2007, pages 8 - 10, XP055099479
- None

## Description

### FIELD OF THE INVENTION

This application relates to cellular communications systems. More specifically, this application relates to reference signal design in a cellular network that supports both legacy and current mobile systems.

### BACKGROUND OF THE INVENTION

Standards for cellular networks have evolved over time. Presently, the 3GPP and/or "3G Rel-8" standards are in use. However, 3GPP has been evolving into the 3GPP Long Term Evolution (LTE) standard, often referred to as "LTE-A".

As to be expected, the adoption of the next generation of many technologies takes place incrementally. This occurs for a number of reasons, including consumer delay in, for example, the adoption of electronic devices compliant with the next generation system. In particular, during the period of transition between two technologies, for example, Rel-8 and LTE-A, some users may be using legacy Rel-8 compliant mobile terminals, while other users (e.g. early adopters) may have switched over to LTE-A compliant mobile terminals. Thus, during this period, cellular network providers may be required to support both the legacy and new system.

Many issues arise when a cellular network provider supports both a legacy, e.g. Rel-8, and new system, e.g. LTE-A. One such issue is how a single transmitting terminal, such as a base station (eNB in LTE-A terms) or relay, can be made to efficiently communicate in both systems. Where the transmitting terminal has knowledge of which system a given mobile terminal it is transmitting to is compliant with, the transmitting terminal may code its transmissions to that mobile terminal accordingly. However, this simplistic technique in practice cannot be relied upon because base stations and relays are expected to serve more than one mobile terminal at a time. Thus, in practice, the complexity of supporting both legacy Rel-8 and LTE-A systems at both the transmitting side and the mobile terminal side is considerable. Moreover, considerable overhead may be introduced in both the uplink and downlink directions so as to distinguish between legacy system and new system transmissions.

Even further, as to be expected, the new system may include features not available in the legacy system, and therefore, a challenge arises as to how these new features may be supported while still maintaining backwards compatibility with the legacy system. In particular, Rel-8 supports low order MIMO, while LTE-A supports high-order MIMO (herein considered greater than 4x4 and up to 8x8 transmitting and receiving antennas). High-order MIMO requires a particular reference signal design. However, Rel-8 MIMO (low-order MIMO) also utilizes reference signals. Therefore, a cellular system, and in particular, a transmitting terminal such as a base station, that is both backwards compatible with Rel-8 and with the newer LTE-A, must support both reference signal designs.

As such, there is a need for a reference signal design that is complaint with both the legacy Rel-8 and next generation LTE-A systems.

"Design Aspect for Higher-order MIMO in LTE-advanced" (3GPP draft R1-090144) discusses a number of design aspects which are related to the introduction of 8x8 MIMO in downlink.

### SUMMARY OF THE INVENTION

The invention is defined in the accompanying independent claims.

In a first example useful for understanding the invention, there is provided a method of operation of a MIMO transmitter, in a cellular network supporting both legacy standard-compliant mobile terminals and next generation standard-compliant mobile terminals. The method includes: defining a matrix of resource blocks within an information channel of the cellular network, wherein each resource block corresponds to a region of subcarriers of a transmission timeslot at a given frequency subband; assigning a first set of reference signals (RSs) for the legacy standard-compliant mobile terminals to resource blocks at specific locations within the matrix to be transmitted by the MIMO transmitter, the specific locations being defined by the legacy standard; and assigning a second set of RSs for the next-generation standard-compliant mobile terminals to other resource blocks within the matrix to be transmitted by the MIMO transmitter.

In a second example useful for understanding the invention, there is provided a transmitter in a cellular network capable of operating both in accordance with a legacy-standard and a next-generation standard. The transmitter includes a plurality of antennas and a processor operable to cause the transmitter to: transmit reference signals for mobile terminals compliant with the legacy standard in a first timeslot; and transmit reference signals for mobile terminals compliant with the next-generation standard in a second timeslot.

In a third example useful for understanding the invention, there is provided a transmitter in a cellular network capable of operating both in accordance with a legacy-standard and a next-generation standard. The transmitter includes a plurality of antennas and a processor operable to cause said transmitter to: transmit reference signals for mobile terminals compliant with said legacy standard at a first frequency subband of a given timeslot; and transmit reference signals for mobile terminals compliant with said next-generation standard at a second frequency subband of said given timeslot.

Other examples will become apparent to those of ordinary skill in the art upon review of the following description of specific embodiments of the disclosure in conjunction with the accompanying figures.

### BRIEF DESCRIPTION OF THE DRAWINGS

In the figures which illustrate by way of example only, embodiments of the present disclosure,
**FIG. 1** is a block diagram of a cellular communication system;
**FIG. 2** is a block diagram of an example base station that might be used to implement some embodiments of the present application;
**FIG. 3** is a block diagram of an example wireless terminal that might be used to implement some embodiments of the present application;
**FIG. 4** is a block diagram of an example relay station that might be used to implement some embodiments of the present application;
**FIG. 5** is a block diagram of a logical breakdown of an example OFDM transmitter architecture that might be used to implement some embodiments of the present application;
**FIG. 6** is a block diagram of a logical breakdown of an example OFDM receiver architecture that might be used to implement some embodiments of the present application;
**FIG. 7** is an example SC-FDMA transmitter and receiver for single-in single-out (SISO) configuration provided in accordance with one embodiment of the present application;
**FIG. 8A** is a schematic diagram of an exemplary multiplexing technique for an information channel in accordance with an embodiment of the present application;
**FIG. 8B** is a schematic diagram of another exemplary multiplexing technique for an information channel in accordance with another embodiment of the present application;
**FIG. 9A** is a schematic diagram of an exemplary multiplexing technique for additional common reference signals in accordance with an embodiment of the present application;
**FIG. 9B** is a schematic diagram of another exemplary design for additional common reference signals in accordance with an embodiment of the present application;
**FIG. 10A** is a schematic diagram of an exemplary design for dedicated reference signals in accordance with an embodiment of the present application; and
**FIG. 10B** is a schematic diagram of another exemplary design for dedicated reference signals in accordance with an embodiment of the present application.

Like reference numerals are used in different figures to denote similar elements.

### DETAILED DESCRIPTION

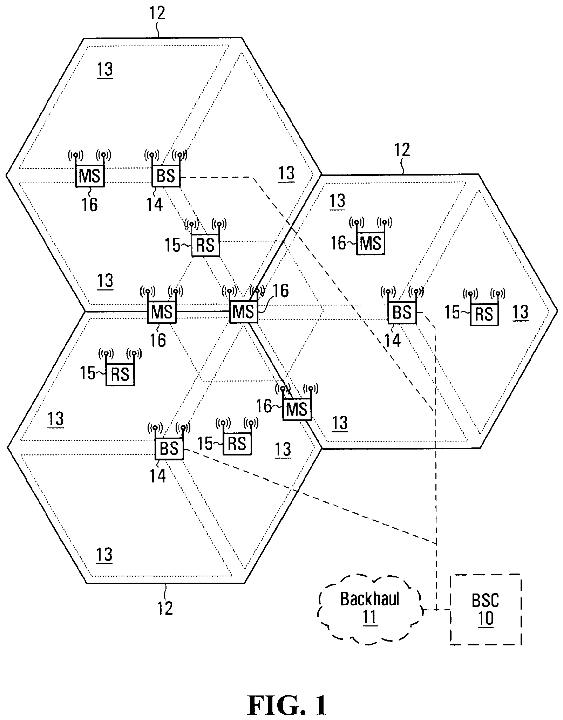

Referring to the drawings, **FIG. 1** shows a base station controller (BSC) 10 which controls wireless communications within multiple cells 12, which cells are served by corresponding base stations (BS) 14. In some configurations, each cell is further divided into multiple sectors 13 or zones (not shown). In general, each base station 14 facilitates communications using OFDM with mobile and/or wireless terminals 16, which are within the cell 12 associated with the corresponding base station 14. The movement of the mobile terminals 16 in relation to the base stations 14 results in significant fluctuation in channel conditions. As illustrated, the base stations 14 and mobile terminals 16 may include multiple antennas to provide spatial diversity for communications. In some configurations, relay stations 15 may assist in communications between base stations 14 and wireless terminals 16. Wireless terminals 16 can be handed can be handed off 18 from any cell 12, sector 13, zone (not shown), base station 14 or relay 15 to an other cell 12, sector 13, zone (not shown), base station 14 or relay 15. In some configurations, base stations 14 communicate with each and with another network (such as a core network or the internet, both not shown) over a backhaul network 11. In some configurations, a base station controller 10 is not needed.

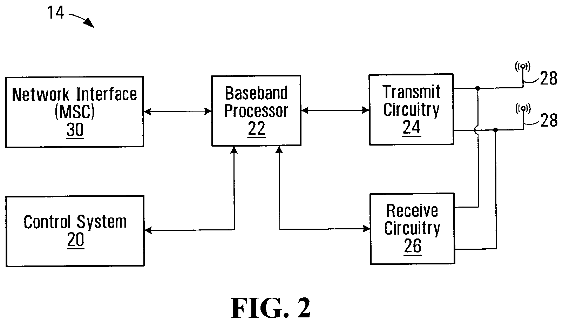

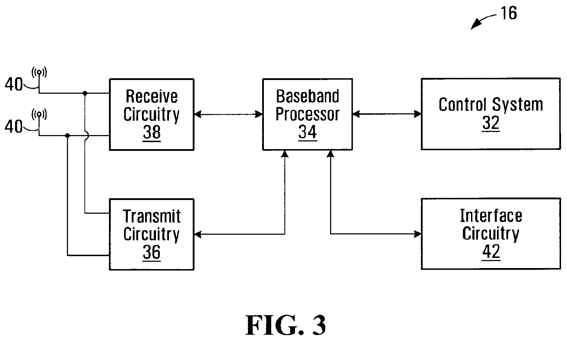

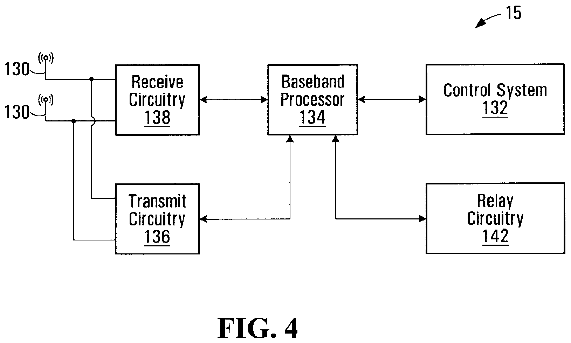

With reference to **FIG. 2****,** an example of a base station 14 is illustrated. The base station 14 generally includes a control system 20, a baseband processor 22, transmit circuitry 24, receive circuitry 26, multiple antennas 28, and a network interface 30. The receive circuitry 26 receives radio frequency signals bearing information from one or more remote transmitters provided by mobile terminals 16 (illustrated in FIG. 3) and relay stations 15 (illustrated in FIG. 4). A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor 22 processes the digitized received signal to extract the information or data bits conveyed in the received signal. This processing typically comprises demodulation, decoding, and error correction operations. As such, the baseband processor 22 is generally implemented in one or more digital signal processors (DSPs) or application-specific integrated circuits (ASICs). The received information is then sent across a wireless network via the network interface 30 or transmitted to another mobile terminal 16 serviced by the base station 14, either directly or with the assistance of a relay 15.

On the transmit side, the baseband processor 22 receives digitized data, which may represent voice, data, or control information, from the network interface 30 under the control of control system 20, and encodes the data for transmission. The encoded data is output to the transmit circuitry 24, where it is modulated by one or more carrier signals having a desired transmit frequency or frequencies. A power amplifier (not shown) will amplify the modulated carrier signals to a level appropriate for transmission, and deliver the modulated carrier signals to the antennas 28 through a matching network (not shown). Modulation and processing details are described in greater detail below.

With reference to **FIG. 3****,** an example of a mobile terminal 16 is illustrated. Similarly to the base station 14, the mobile terminal 16 will include a control system 32, a baseband processor 34, transmit circuitry 36, receive circuitry 38, multiple antennas 40, and user interface circuitry 42. The receive circuitry 38 receives radio frequency signals bearing information from one or more base stations 14 and relays 15. A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor 34 processes the digitized received signal to extract the information or data bits conveyed in the received signal. This processing typically comprises demodulation, decoding, and error correction operations. The baseband processor 34 is generally implemented in one or more digital signal processors (DSPs) and application specific integrated circuits (ASICs).

For transmission, the baseband processor 34 receives digitized data, which may represent voice, video, data, or control information, from the control system 32, which it encodes for transmission. The encoded data is output to the transmit circuitry 36, where it is used by a modulator to modulate one or more carrier signals that is at a desired transmit frequency or frequencies. A power amplifier (not shown) will amplify the modulated carrier signals to a level appropriate for transmission, and deliver the modulated carrier signal to the antennas 40 through a matching network (not shown). Various modulation and processing techniques available to those skilled in the art are used for signal transmission between the mobile terminal and the base station, either directly or via the relay station.

In OFDM modulation, the transmission band is divided into multiple, orthogonal carrier waves. Each carrier wave is modulated according to the digital data to be transmitted. Because OFDM divides the transmission band into multiple carriers, the bandwidth per carrier decreases and the modulation time per carrier increases. Since the multiple carriers are transmitted in parallel, the transmission rate for the digital data, or symbols, on any given carrier is lower than when a single carrier is used.

OFDM modulation utilizes the performance of an Inverse Fast Fourier Transform (IFFT) on the information to be transmitted. For demodulation, the performance of a Fast Fourier Transform (FFT) on the received signal recovers the transmitted information. In practice, the IFFT and FFT are provided by digital signal processing carrying out an Inverse Discrete Fourier Transform (IDFT) and Discrete Fourier Transform (DFT), respectively. Accordingly, the characterizing feature of OFDM modulation is that orthogonal carrier waves are generated for multiple bands within a transmission channel. The modulated signals are digital signals having a relatively low transmission rate and capable of staying within their respective bands. The individual carrier waves are not modulated directly by the digital signals. Instead, all carrier waves are modulated at once by IFFT processing.

In operation, OFDM is preferably used for at least downlink transmission from the base stations 14 to the mobile terminals 16. Each base station 14 is equipped with "n" transmit antennas 28 (n >=1), and each mobile terminal 16 is equipped with "m" receive antennas 40 (m>=1). Notably, the respective antennas can be used for reception and transmission using appropriate duplexers or switches and are so labelled only for clarity.

When relay stations 15 are used, OFDM is preferably used for downlink transmission from the base stations 14 to the relays 15 and from relay stations 15 to the mobile terminals 16.

With reference to **FIG. 4****,** an example of a relay station 15 is illustrated. Similarly to the base station 14, and the mobile terminal 16, the relay station 15 will include a control system 132, a baseband processor 134, transmit circuitry 136, receive circuitry 138, multiple antennas 130, and relay circuitry 142. The relay circuitry 142 enables the relay 14 to assist in communications between a base station 14 and mobile terminals 16. The receive circuitry 138 receives radio frequency signals bearing information from one or more base stations 14 and mobile terminals 16. A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor 134 processes the digitized received signal to extract the information or data bits conveyed in the received signal. This processing typically comprises demodulation, decoding, and error correction operations. The baseband processor 134 is generally implemented in one or more digital signal processors (DSPs) and application specific integrated circuits (ASICs).

For transmission, the baseband processor 134 receives digitized data, which may represent voice, video, data, or control information, from the control system 132, which it encodes for transmission. The encoded data is output to the transmit circuitry 136, where it is used by a modulator to modulate one or more carrier signals that is at a desired transmit frequency or frequencies. A power amplifier (not shown) will amplify the modulated carrier signals to a level appropriate for transmission, and deliver the modulated carrier signal to the antennas 130 through a matching network (not shown). Various modulation and processing techniques available to those skilled in the art are used for signal transmission between the mobile terminal and the base station, either directly or indirectly via a relay station, as described above.

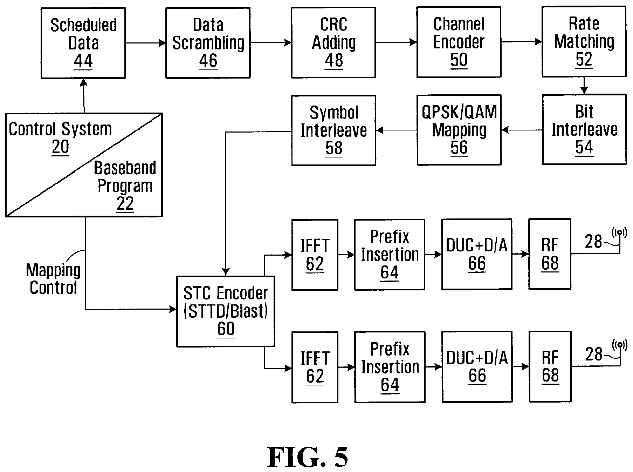

With reference to **FIG. 5****,** a logical OFDM transmission architecture will be described. Initially, the base station controller 10 will send data to be transmitted to various mobile terminals 16 to the base station 14, either directly or with the assistance of a relay station 15. The base station 14 may use the channel quality indicators (CQIs) associated with the mobile terminals to schedule the data for transmission as well as select appropriate coding and modulation for transmitting the scheduled data. The CQIs may be directly from the mobile terminals 16 or determined at the base station 14 based on information provided by the mobile terminals 16. In either case, the CQI for each mobile terminal 16 is a function of the degree to which the channel amplitude (or response) varies across the OFDM frequency band.

Scheduled data 44, which is a stream of bits, is scrambled in a manner reducing the peak-to-average power ratio associated with the data using data scrambling logic 46. A cyclic redundancy check (CRC) for the scrambled data is determined and appended to the scrambled data using CRC adding logic 48. Next, channel coding is performed using channel encoder logic 50 to effectively add redundancy to the data to facilitate recovery and error correction at the mobile terminal 16. Again, the channel coding for a particular mobile terminal 16 is based on the CQI. In some implementations, the channel encoder logic 50 uses known Turbo encoding techniques. The encoded data is then processed by rate matching logic 52 to compensate for the data expansion associated with encoding.

Bit interleaver logic 54 systematically reorders the bits in the encoded data to minimize the loss of consecutive data bits. The resultant data bits are systematically mapped into corresponding symbols depending on the chosen baseband modulation by mapping logic 56. Preferably, Quadrature Amplitude Modulation (QAM) or Quadrature Phase Shift Key (QPSK) modulation is used. The degree of modulation is preferably chosen based on the CQI for the particular mobile terminal. The symbols may be systematically reordered to further bolster the immunity of the transmitted signal to periodic data loss caused by frequency selective fading using symbol interleaver logic 58.

At this point, groups of bits have been mapped into symbols representing locations in an amplitude and phase constellation. When spatial diversity is desired, blocks of symbols are then processed by space-time block code (STC) encoder logic 60, which modifies the symbols in a fashion making the transmitted signals more resistant to interference and more readily decoded at a mobile terminal 16. The STC encoder logic 60 will process the incoming symbols and provide "n" outputs corresponding to the number of transmit antennas 28 for the base station 14. The control system 20 and/or baseband processor 22 as described above with respect to FIG. 5 will provide a mapping control signal to control STC encoding. At this point, assume the symbols for the "n" outputs are representative of the data to be transmitted and capable of being recovered by the mobile terminal 16.

For the present example, assume the base station 14 has two antennas 28 (n=2) and the STC encoder logic 60 provides two output streams of symbols. Accordingly, each of the symbol streams output by the STC encoder logic 60 is sent to a corresponding IFFT processor 62, illustrated separately for ease of understanding. Those skilled in the art will recognize that one or more processors may be used to provide such digital signal processing, alone or in combination with other processing described herein, The IFFT processors 62 will preferably operate on the respective symbols to provide an inverse Fourier Transform. The output of the IFFT processors 62 provides symbols in the time domain. The time domain symbols are grouped into frames, which are associated with a prefix by prefix insertion logic 64. Each of the resultant signals is up-converted in the digital domain to an intermediate frequency and converted to an analog signal via the corresponding digital up-conversion (DUC) and digital-to-analog (D/A) conversion circuitry 66. The resultant (analog) signals are then simultaneously modulated at the desired RF frequency, amplified, and transmitted via the RF circuitry 68 and antennas 28. Notably, pilot signals known by the intended mobile terminal 16 are scattered among the sub-carriers. The mobile terminal 16, which is discussed in detail below, will use the pilot signals for channel estimation.

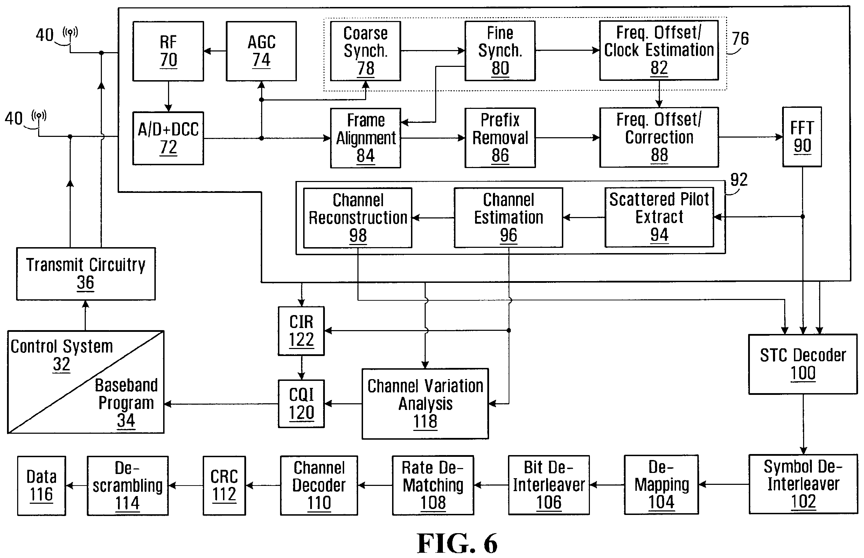

Reference is now made to **FIG. 6** to illustrate reception of the transmitted signals by a mobile terminal 16, either directly from base station 14 or with the assistance of relay 15. Upon arrival of the transmitted signals at each of the antennas 40 of the mobile terminal 16, the respective signals are demodulated and amplified by corresponding RF circuitry 70. For the sake of conciseness and clarity, only one of the two receive paths is described and illustrated in detail. Analog-to-digital (A/D) converter and down-conversion circuitry 72 digitizes and downconverts the analog signal for digital processing. The resultant digitized signal may be used by automatic gain control circuitry (AGC) 74 to control the gain of the amplifiers in the RF circuitry 70 based on the received signal level.

Initially, the digitized signal is provided to synchronization logic 76, which includes coarse synchronization logic 78, which buffers several OFDM symbols and calculates an auto-correlation between the two successive OFDM symbols. A resultant time index corresponding to the maximum of the correlation result determines a fine synchronization search window, which is used by fine synchronization logic 80 to determine a precise framing starting position based on the headers. The output of the fine synchronization logic 80 facilitates frame acquisition by frame alignment logic 84. Proper framing alignment is important so that subsequent FFT processing provides an accurate conversion from the time domain to the frequency domain. The fine synchronization algorithm is based on the correlation between the received pilot signals carried by the headers and a local copy of the known pilot data. Once frame alignment acquisition occurs, the prefix of the OFDM symbol is removed with prefix removal logic 86 and resultant samples are sent to frequency offset correction logic 88, which compensates for the system frequency offset caused by the unmatched local oscillators in the transmitter and the receiver. Preferably, the synchronization logic 76 includes frequency offset and clock estimation logic 82, which is based on the headers to help estimate such effects on the transmitted signal and provide those estimations to the correction logic 88 to properly process OFDM symbols.

At this point, the OFDM symbols in the time domain are ready for conversion to the frequency domain using FFT processing logic 90. The results are frequency domain symbols, which are sent to processing logic 92. The processing logic 92 extracts the scattered pilot signal using scattered pilot extraction logic 94, determines a channel estimate based on the extracted pilot signal using channel estimation logic 96, and provides channel responses for all sub-carriers using channel reconstruction logic 98. In order to determine a channel response for each of the sub-carriers, the pilot signal is essentially multiple pilot symbols that are scattered among the data symbols throughout the OFDM sub-carriers in a known pattern in both time and frequency. Continuing with FIG. 6, the processing logic compares the received pilot symbols with the pilot symbols that are expected in certain sub-carriers at certain times to determine a channel response for the sub-carriers in which pilot symbols were transmitted. The results are interpolated to estimate a channel response for most, if not all, of the remaining sub-carriers for which pilot symbols were not provided. The actual and interpolated channel responses are used to estimate an overall channel response, which includes the channel responses for most, if not all, of the sub-carriers in the OFDM channel.

The frequency domain symbols and channel reconstruction information, which are derived from the channel responses for each received path are provided to an STC decoder 100, which provides STC decoding on both received paths to recover the transmitted symbols. The channel reconstruction information provides equalization information to the STC decoder 100 sufficient to remove the effects of the transmission channel when processing the respective frequency domain symbols.

The recovered symbols are placed back in order using symbol de-interleaver logic 102, which corresponds to the symbol interleaver logic 58 of the transmitter. The de-interleaved symbols are then demodulated or de-mapped to a corresponding bitstream using de-mapping logic 104. The bits are then de-interleaved using bit de-interleaver logic 106, which corresponds to the bit interleaver logic 54 of the transmitter architecture. The de-interleaved bits are then processed by rate de-matching logic 108 and presented to channel decoder logic 110 to recover the initially scrambled data and the CRC checksum. Accordingly, CRC logic 112 removes the CRC checksum, checks the scrambled data in traditional fashion, and provides it to the de-scrambling logic 114 for de-scrambling using the known the known base station de-scrambling code to recover the originally transmitted data 116.

In parallel to recovering the data 116, a CQI, or at least information sufficient to create a CQI at the base station 14, is determined and transmitted to the base station 14. As noted above, the CQI may be a function of the carrier-to-interference ratio (CR), as well as the degree to which the channel response varies across the various sub-carriers in the OFDM frequency band. For this embodiment, the channel gain for each sub-carrier in the OFDM frequency band being used to transmit information is compared relative to one another to determine the degree to which the channel gain varies across the OFDM frequency band. Although numerous techniques are available to measure the degree of variation, one technique is to calculate the standard deviation of the channel gain for each sub-carrier throughout the OFDM frequency band being used to transmit data.

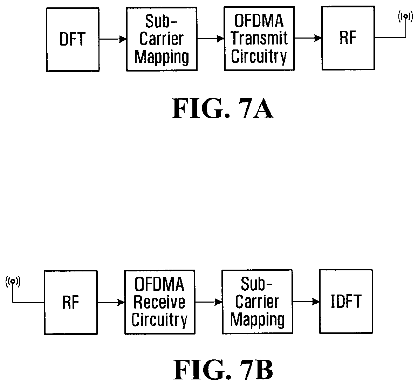

Referring to FIG. 7, an example SC-FDMA transmitter 7(a) and receiver 7(b) for single-in single-out (SISO) configuration is illustrated provided in accordance with one embodiment of the present application. In SISO, mobile stations transmit on one antenna and base stations and/or relay stations receive on one antenna. FIG. 7 illustrates the basic signal processing steps needed at the transmitter and receiver for the LTE SC-FDMA uplink. In some embodiments, SC-FDMA (Single-Carrier Frequency Division Multiple Access) is used. SC-FDMA is a modulation and multiple access scheme introduced for the uplink of 3GPP Long Term Evolution (LTE) broadband wireless fourth generation (4G) air interface standards, and the like. SC-FDMA can be viewed as a DFT pre-coded OFDMA scheme, or, it can be viewed as a single carrier (SC) multiple access scheme. There are several similarities in the overall transceiver processing of SC-FDMA and OFDMA. Those common aspects between OFDMA and SC-FDMA are illustrated in the OFDMA TRANSMIT CIRCUITRY and OFDMA RECEIVE CIRCUITRY, as they would be obvious to a person having ordinary skill in the art in view of the present specification. SC-FDMA is distinctly different from OFDMA because of the DFT pre-coding of the modulated symbols, and the corresponding IDFT of the demodulated symbols. Because of this pre-coding, the SC-FDMA sub-carriers are not independently modulated as in the case of the OFDMA sub-carriers. As a result, PAPR of SC-FDMA signal is lower than the PAPR of OFDMA signal. Lower PAPR greatly benefits the mobile terminal in terms of transmit power efficiency.

**FIGS. 1 to 7** provide one specific example of a communication system that could be used to implement embodiments of the application. It is to be understood that embodiments of the application can be implemented with communications systems having architectures that are different than the specific example, but that operate in a manner consistent with the implementation of the embodiments as described herein.

Specifically, the communications system of **FIGS. 1 to 7** could be a multiple-input, multiple-output (MIMO) wireless communication system. As may be appreciated, a MIMO system has multiple communication channels that are used between a plurality of antennas at a transmitter and a receiver. Accordingly, in a MIMO system a transmitting device (e.g. base station **14** or relay **15)** will have N antennas, and a receiving device (e.g. mobile terminal **16)** will have M antennas. Conversely, any one or more antennas at mobile terminal **16** may be transmitters, and any one or more antennas at base station **14**/relay **15** may be receivers. Space-time coding controls what data is transmitted from each of the N antennas. A space-time encoding function at the transmitter processes data to be transmitted and creates unique information (depending on the encoding function, this information could be a subset of the data stream to be transmitted or could be a copy of the full data stream, as further detailed below) to transmit from the N antennas. Each of the M antennas will receive signals transmitted from each of the N antennas. A space-time decoding function at the receiving device will process the information sent from the N antennas to recover the data.

More specifically, the legacy Rel-8 system supports low-order MIMO (i.e. less than 4 transmit antennas by 4 receive antennas ("4×4")), whereas LTE-A supports high-order MIMO (i.e. greater than 4 transmit antennas and in particular up to 8 transmit by 8 receive antennas ("8×8")). Thus, a relatively large number of transmit antennas at eNBs (e.g. base station **14)** could be deployed at a given eNB. There may be less correlation between antennas at eNBs (as compared to between antennas at legacy lower-order MIMO sites) and therefore these eNBs may be able to support single-site high-order MIMO (up to 8x8) in LTE-A downlink transmissions. This in turn, may result in greater spectral efficiency.

As may be appreciated, MIMO techniques are not limited to multiple antennas at a given transmitting site. In this regard, LTE-A supports coordinated multi-point (i.e. from multiple discrete antennas) transmission and reception. In particular, multi-point transmissions may be formed in the following scenarios: from the same eNB (e.g. base station **14);** from different eNBs; between eNB and NR (e.g. relay 15); between different NRs. Multi-point transmissions techniques provide advantages including improving macro diversity and multiple-user transmission (e.g. MU-MIMO). Moreover, multi-point transmission techniques may increase cell-edge throughput by reducing inter-cell interference and/or converting inter-cell interference into a beneficial signal.

As may be appreciated, both the legacy Rel-8 and LTE-A standards provide specifications for supporting MIMO transmissions/receptions. Such specifications include specifications directed towards, for example, encoding and decoding control information signals. Encoding of reference signals, in particular, is the focus of the present application.

As will be understood by those of ordinary skill in the art, reference signals ("RS") are signals inserted into a downlink transmission signal (e.g. from a base station **14** (eNB)), that is recognizable to the intended receiver (e.g. target mobile terminal **16).** The reference signal may provide an indicator to facilitate channel estimation for measurement and de-modulation of the received signal at the receiver. In the downlink direction, cell-specific RSs may be provided; these are available for all mobile terminals in that cell. Moreover, a mobile-terminal specific RS may be embedded in data signals transmitted to that specific mobile terminal. In the uplink direction, RSs for demodulation and sounding may be provided for channel estimation for the purpose of demodulation and channel sounding, respectively. More information about RSs, including RSs other than those specifically discussed herein, may be found in the LTE standard, and in other LTE-standard references (e.g. at http://www.wiley.com//legacy/wileychi/sesia_theumts/supp/LTE-A_Pocket_Dictionary_of_Acronyms.pdf).

RSs are used in both the legacy Rel-8 system and the LTE-A systems. Therefore, at present, and more specifically, during the period of transition between the two systems, it is desirable to support both RS designs so that LTE-A compliant mobile terminals may be supported and backward compatibility of Rel-8 compliant mobile terminals is maintained.

In this regard, constraints resulting from the manner in which RSs are employed in both systems must be considered in any common Rel-8/LTE-A RS encoding scheme. Some such constraints are discussed below.

More specifically, in LTE-A, RSs used in supporting high-order MIMO in the downlink direction should provide good channel measurement/estimation to enhance system performance (e.g. high-order MIMO system throughput). Moreover, management overhead of the various RSs should be minimized so that other factors such as data rate can be maximized in the system. As higher-orders of transmit diversity are introduced, consideration should be given to managing control channel information (e.g. Physical Downlink Control Channel ("PDCCH")) having regard to the trade-off between performance gain and overhead. In respect of coordinated multi-point transmission and reception (which are supported in LTE-A, as previously explained), the following non-exhaustive list of constraints may apply: RSs from the multi-points should be orthogonal to each other; data and channel information must able to be shared between multi-points; channel information must able to be fed-back from the mobile terminals; and coordinated multi-point transmission between NRs (e.g. relay(s) **15)** and between NRs and eNBs (e.g. base station(s) **14)** must be allowed.

In view of the foregoing, the present application presents a RS design that supports RSs defined in both Rel-8 and LTE-A systems. In particular, the RS design of the present application may support both Rel-8 and LTE-A compliant mobile terminals at the same time. Specifically, as further explained below, the RS design of the present application multiplexes downlink RS for both LTE-A and Rel-8 compliant mobile terminals together.

In a first exemplary embodiment of the present application, in an LTE-A system with more than 4 transmit antennas at a particular eNB (e.g. a LTE-A compliant base station **14),** Physical Downlink Control Channel (PDCCH) control signals may be transmitting using up to a 4-transmitter transmit diversity scheme. It has been observed that the gain of using a more than 4-transmitter transmit diversity scheme is marginal as the overhead of additional RSs in the control region of a signal is large. In this embodiment, a common transmit diversity scheme may be employed for LTE-A and Rel-8 compliant mobile terminals. In particular, a 4-transmitter transmit diversity scheme may be used. Conveniently, the PDCCH channel may work for both LTE-A mobile terminals and Rel-8 mobile terminals without any modification. Also conveniently, no additional common RS may need to be transmitted in the control region of the PDCCH other than those defined in the Rel-8 standard. As may be appreciated, in this manner, overhead in the control region of the PDCCH is minimized.

In an LTE-A system, virtual antenna mapping may be used with more than 4-transmit antennas at an eNB (e.g. base station **14).** Reference signals are defined for some such virtual antenna mapping schemes. In this regard, in a second exemplary embodiment of the present application, a minimal number of common RS ports (e.g. 4) could be maintained for decoding of PDCCH signals for both LTE-A and Rel-8 mobile terminals. A minimal number of common RS ports (e.g. 4) could be maintained for decoding PDSCH (Physical Downlink Shared Channel) signals for Rel-8 mobile terminals. Virtual antenna mappings may be configured by an eNB on a semi-static or static basis, depending upon the deployment scenario. Additional antenna ports (e.g. greater than 4) may be configured by an eNB adaptively for different LTE-A mobile terminals to support different layer transmissions. Virtual antenna coding may be accomplished by using fixed precoding, cyclic delay diversity (CDD) or RF switching.

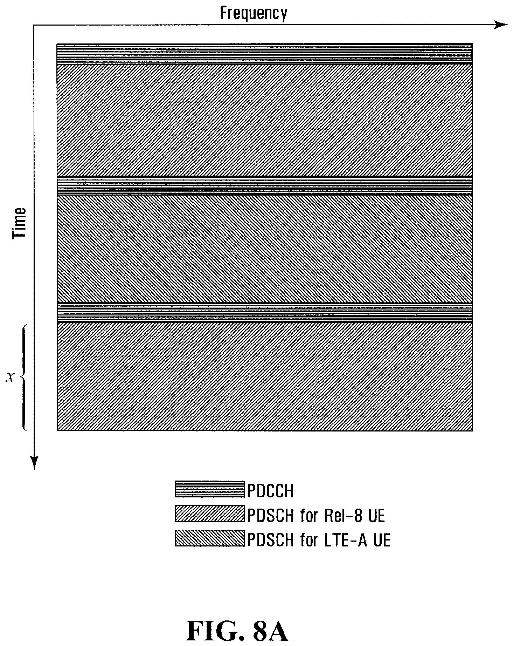

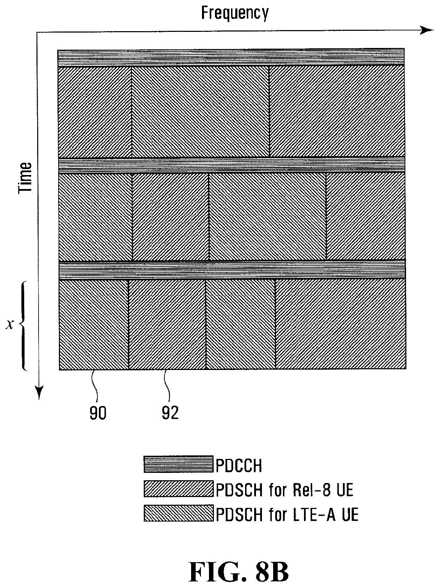

Alternatively, since the PDSCH is used for all user data as well as for broadcast system information, PDSCH resources for Rel-8 and LTE-A devices may be multiplexed. Specifically, in a third exemplary embodiment of the present application, in a LTE-A system with more than 4 transmit antennas at an eNB (e.g. base station **14),** RSs encoded in the PDSCH may be multiplexed using either a time-division multiplexing (TDM) technique or a frequency-division multiplexing (FDM) technique. For TDM **(****FIG. 8A****),** each subframe may be assigned either to a Rel-8 or LTE-A mobile terminal transmission. For FDM **(****FIG. 8B****),** within the same subframe, different resource blocks (RB) may be assigned for Rel-8 and LTE-A mobile terminals, simultaneously. Additional RSs (e.g. greater than 4-transmitter) required to support high-order MIMO may be limited to be carried within the resources assigned to the LTE-A mobile terminal. Selection between TDM and FDM techniques may be based on various considerations. However, in particular, FDM multiplexing may be preferable to TDM as there may be less impact on Rel-8 mobile terminals as additional RSs (greater than 4-transmitters) are introduced in order to support high-order MIMO; this is because any new RSs impact only the resources assigned to LTE-A mobile terminals (the very terminals likely capable of supporting high-order MIMO). Moreover, since RSs for both Rel-8 and LTE-A mobile terminals may be transmitted simultaneously using FDM, this technique allows both types of mobile terminals to be supported at the same time with low latency.

**FIG. 8A** is a schematic diagram of a TDM multiplexing scheme for common PDCCH resources, Rel-8 PDSCH resources and PDSCH resources. As illustrated, a block of time every *x* ms is assigned to PDCCH resources and these alternate with blocks of time assigned to Rel-8 PDSCH resources and LTE-A PDSCH resources, respectively.

**FIG. 8B** is a schematic diagram of a FDM multiplexing scheme. As with TDM multiplexing, a block of time every *x* ms is assigned to common PDCCH resources. However, in FDM, different resource blocks (RBs) (i.e. a unit of transmission consisting of a number of subcarriers (possibly at a given frequency subband) in the frequency domain and a timeslot in the time domain) may be assigned to Rel-8 PDSCH resources and LTE-A PDSCH resources, respectively. As illustrated, RB 90 is assigned to an LTE-A PDSCH resource, while RB 92 is assigned to a Rel-8 PDSCH resource.

As may be appreciated, RSs may also be used for channel and rank measurements and feedback in both the Rel-8 and LTE-A systems. Accordingly, in a fourth exemplary embodiment of the present application, the disclosed RS design may support such RSs of both systems.

In particular, in LTE-A systems with more than 4 transmit antennas at an eNB (e.g. base station **14),** Rel-8 common reference signals (CRS) for 2- or 4-transmitter ports may be used for Channel Quality Indicator (CQI), Precoding Matrix Indicator (PMI) and rank measurements of 4 virtual transmitter ports.

Moreover, in an LTE-A system with more than 4 transmit antennas at an eNB (e.g. base station **14),** the CQI and rank variation may be less as compared with systems with 2-4 antenna ports. Consequently, lower density CRS of antenna ports greater than 4 may be needed for CQI and rank measurement. Thus, RSs may not cover the whole system bandwidth and every subframe. In this regard, CRSs may be periodically transmitted for all antenna ports or for ports greater than 4. The period of such transmissions may be configurable as required. In the claimed embodiment, the CRSs may be transmitted on the same subframes as PSCH/SSCH channels (i.e. Primary/Secondary Synchronization Channel) to allow a 5 ms measurement period. Alternatively, in a non-claimed example, the CRSs may be transmitted at certain reserved resources, such as an unused traffic channel, or spare tones within an OFDM frame.

RS design to support high-order MIMO may be realized using precoding. For example, for FDD systems, analog channel information may be measured by the target mobile terminal (e.g. mobile terminal **16)** and fed-back to the serving eNB by two-way sounding. The measurement may be based on a CRS or a combination of CRSs and dedicated RS. For TDD systems, channel information may be measured at the eNB (e.g. base station **14)** from uplink transmissions. The eNB may apply precoding to the data and may transmit additional CRS or dedicated RSs for a mobile terminal to decode the data. Conveniently, in this embodiment, the eNB is responsible for rank and precoding matrix selection from the channel information obtained from mobile terminal feedback or sounding channels (for FDD) and through uplink channel measurement (for TDD). Therefore, conveniently, the mobile terminal is not required to select and feedback rank and precoding matrix indicators.

On the recipient (i.e. mobile terminal **16)** side, RSs may be used to facilitate data demodulation. Specifically, mobile terminal dedicated RS or a combined dedicated RS and Rel-8 CRS may be used to facilitate data decoding by the receiving mobile terminal. In the proposed RS design of the present application, for 1 to 4 stream transmissions, 1, 2 or 4 Rel-8 CRSs may be employed. Alternatively, 1, 2 or 4 legacy CRSs and one (or more) mobile terminal specific dedicated RS may be employed. In selecting between the options, consideration may be given to the overhead versus performance trade-off. For a 5 or more stream transmission, Rel-8 1, 2 or 4 CRSs and additional mobile terminal specific dedicated RS may be employed. Alternatively, a combination of 4 Rel-8 CRSs and 4 additional CRSs (for a total of 8 CRSs) may be employed. This, however, requires a multiplexing technique. Exemplary multiplexing techniques may include transmitting the 4 additional CRSs at different subcarriers than the Rel-8 CRSs, or multiplexing the two types of CRSs by Code Division Multiplexing (CDM).

Conveniently, the techniques of the above-described embodiments may be combined to provide a more robust RS design for a LTE-A system with greater than 4 transmit antennas and a more robust RS design for coordinated MIMO, as further explained below.

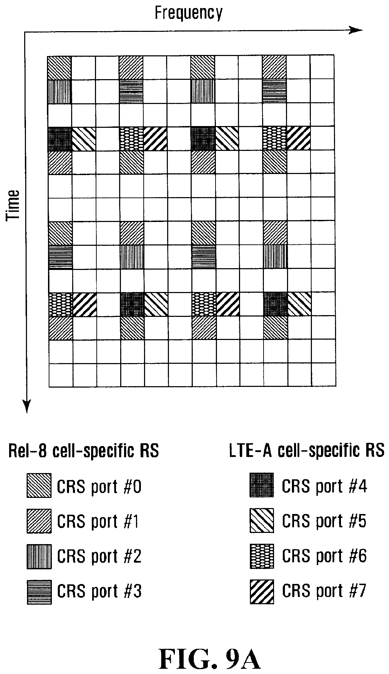

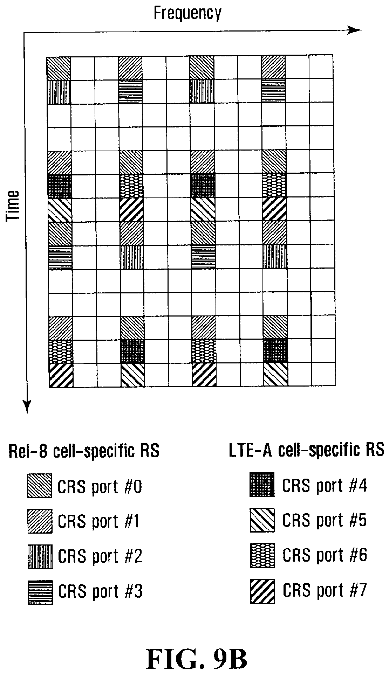

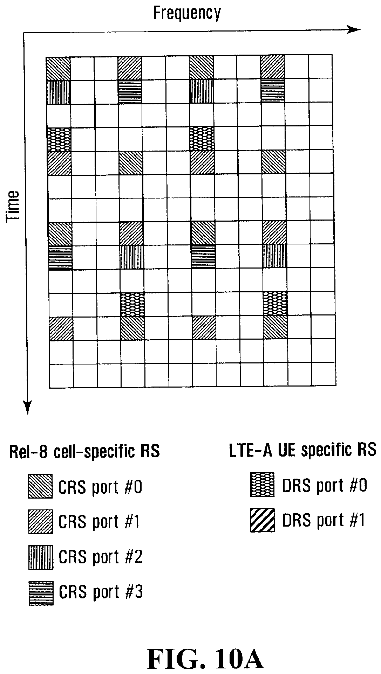

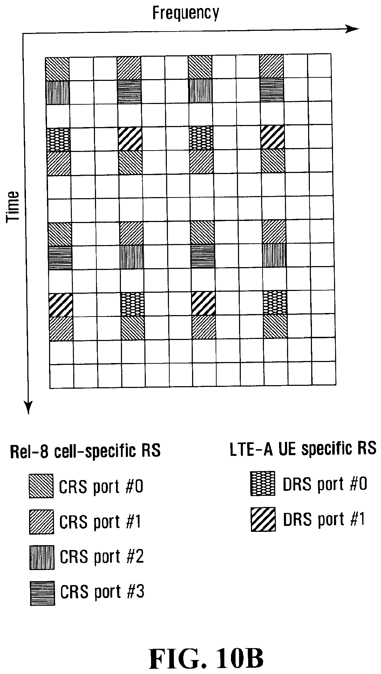

An exemplary RS design for an LTE-A system with greater than 4 transmit antennas may include the maintenance of a cell-specific common RS ports for Rel-8 (2 or 4 ports) for PDCCH or PDSCH regions where Rel-8 mobile terminals are supported. For PDSCH regions where LTE-A mobile terminals are supported, cell-specific common RS ports for Rel-8 may be maintained. In PDSCH regions assigned to LTE-A mobile terminals, additional cell-specific (common) RS ports up to 4 may be configured. Alternatively, in PDSCH regions assigned to LTE-A mobile terminals, additional mobile terminal-specific (dedicated) RS ports may be configured. The number of such additional mobile terminal-specific RS ports may be configured by the eNB (e.g. base station 14) on a per mobile terminal basis. It may be preferable if these additional CRSs or dedicated RS ports have similar RS patterns as Rel-8 CRSs for improved backwards compatibility. Conveniently, the density of additional dedicated RSs may be less than those of Rel-8 common RSs due to less channel variation in a high-order MIMO system. Schematic diagrams showing exemplary modes of multiplexing Rel-8 and LTE-A RSs are provided in **FIGS. 9** and **10****.**

**FIGS. 9A** and **9B** depict two exemplary RS designs that each support an LTE-A system with greater than 4 transmit antennas and a Rel-8 system, and that incorporates additional common RSs. As shown, Rel-8 cell-specific RSs are assigned to CRS ports #0-#3 and LTE-A cell-specific RSs are assigned to CRS ports #4-#7. It may be appreciated that each of these ports may correspond to a physical antenna or a virtual antenna. Each block (or "resource block") in the time-frequency grid (or matrix) represents a subcarrier over a specific time period (e.g. a transmission timeslot) at a given frequency subband. Notably, the Rel-8 and LTE-A RSs are assigned certain subcarriers at certain times. Referring to **FIG. 9A**, it may be noted that Rel-8 RSs are assigned 24 subcarriers, while LTE-A RSs are assigned 16 subcarriers. Thus, it should be noted that the density of the RSs has not doubled despite the RS design incorporating both Rel-8 and LTE-A RSs. The same is true for the exemplary design depicted in **FIG. 9B****.** It may be further noted that the arrangement of the Rel-8 RS subcarriers relative to the LTE-A RS resource blocks is different in the design of **FIG. 9B****.** Optimal placement of the various RSs in specific subcarriers of the time-frequency grid may be dependent upon factors such as channel conditions and may be determined through experimentation, analysis or simulation. Conveniently, Rel-8 RSs may be placed in the subcarrier locations expected by Rel-8 compliant mobile terminals; in this manner, the impact on these Rel-8 mobile terminals may be lessened by the addition of new RSs.

**FIGS. 10A** and **10B** depict two exemplary RS designs that each support an LTE-A system with greater than 4 transmit antennas and a Rel-8 system, and that incorporates additional dedicated RSs. Rel-8 cell-specific RSs are assigned to CRS ports #0-#3 and LTE-A mobile terminal specific RSs are assigned to DRS ports #0 and #1. Again, these antenna ports may correspond to physical antennas or virtual antennas. In the embodiment of **FIG. 10A****,** Rel-8 cell-specific RSs are assigned 24 subcarriers and LTE-A mobile terminal specific RSs are assigned 4 subcarriers. **FIG. 10B** provides a variation of the design of **FIG. 10A****.** As with the distribution of the additional common RSs **(****FIGS. 9A** and **9B****),** optimal placement of the various RSs in specific subcarriers of the time-frequency matrix may be dependent upon factors such as channel conditions and may be determined through experimentation, analysis and simulation.

As may be appreciated, three types of coordinated MIMO may exist: eNB (e.g. base station **14)** and eNB coordinated MIMO; eNB and NR (e.g. relay 15) coordinated MIMO; and NR and NR coordinated MIMO. Thus, an exemplary RS design for coordinated MIMO may support all three types. In an exemplary design, eNB and eNB coordinated MIMO may employ orthogonal RSs and time or frequency shifting RS from different eNBs, as required for proper receipt by the target mobile terminal. For eNB and NR coordinated MIMO, NR may use time or frequency shifted RS of the eNB, or a new RS pattern may be assigned to the NR which is orthogonal to the RS of the eNB. Moreover, the NR may use a dedicated RS for data decoding and one or more Physical Hybrid ARQ Indicator Channel (PHICH) resources may be reserved for transmitting an RS for channel measurement. RSs from different NRs may be CDM or FDM multiplexed on the reserved PHICH resource. For NR and NR coordinated MIMO, NRs may use shifted or CDM multiplexed RSs. A new RS pattern may be assigned to the NR which is orthogonal to the RS of the eNB. As with eNB and NR coordinated MIMO, one or more PHICH resources may be reserved for transmitting an RS for channel measurement of NR. RSs from different NRs may be CDM or FDM multiplexed on the reserved PHICH resource.

In summary, the exemplary RS design disclosed above may support both Rel-8 and LTE-A mobile terminals. More specifically, the disclosed RS design may support an LTE-A system with more than 4 transmit antennas at a base station (eNB). Downlink control signals may be transmitted using transmit diversity assuming up to 4 transmitters. No additional common RS may be transmitted in the control region other than those defined in Rel-8. In this manner, a minimal number of cell-specific or common RS ports (e.g. 4) may be maintained for decoding PDCCH signals for both LTE-A and Rel-8 mobile terminals and for decoding PDSCH signals for Rel-8 terminals by, for example, virtual antenna mapping. Additional RS ports may be configured as cell-specific or mobile terminal-specific. If mobile terminal specific or dedicated RS ports, they may be adaptively assign/formed by the eNB on a per mobile terminal basis in order to support high-order MIMO transmission. Virtual antenna mapping may be configured by an eNB on a semi-static or static basis, depending on the deployment scenario, channel conditions or mobile terminal capability. Virtual antenna techniques may be realized by using a fixed precoding, CDD or RF switching. FDM/TDM multiplexing of Rel-8 and LTE-A RSs may be supported in order to accommodate both high-order and low order MIMO. In this regard, RSs for additional antennas or all antenna ports may be configured to transmit periodically on reserved resources for downlink channel measurements. The eNB may determine the rank and precoding matrix through channel information received in mobile terminal feedback, or sounding channels (for FDD) and through uplink channel measurement (for TDD). The mobile terminal may decode data transmitted using high-order MIMO through cell-specific or common RSs, or a combination of common RSs and mobile terminal specific/dedicated RS.

To support coordinated MIMO, the above described exemplary RS design includes orthogonal RSs by time or frequency shifting RSs from different eNBs. One or more PHICH resources may be reserved to transmit RS for channel measure of NR. RSs from different NRs may be CDM or FDM multiplexed on the same PHICH resource.

Of course, the above described embodiments are intended to be illustrative only and in no way limiting. The described embodiments of carrying out the invention are susceptible to many modifications of form, arrangement of parts, details and order of operation. The invention, rather, is intended to encompass all such modification within its scope, as defined by the claims.

## Claims

1. A method of operation of a MIMO transmitter (14, 15) in a cellular network supporting both legacy standard-compliant mobile terminals and next generation standard-compliant mobile terminals (16), wherein the legacy standard-compliant mobile terminals supports low-order MIMO and the next generation standard-compliant mobile terminals support high-order MIMO, the low-order MIMO having four or less antenna ports and the high-order MIMO having greater than four antenna ports, said method comprising:
defining a matrix of resource blocks within an information channel of said cellular network, wherein each resource block corresponds to a region of subcarriers of a transmission timeslot at a given frequency subband;
assigning a first set of cell-specific reference signals, CRSs, for said legacy standard-compliant mobile terminals to resource blocks at specific locations within said matrix to be transmitted by said MIMO transmitter,
said specific locations being defined by said legacy standard; and
assigning a second set of CRSs for said next-generation standard-compliant mobile terminals to other resource blocks within said matrix to be transmitted by said MIMO transmitter; and **characterized in that**, for all antenna ports or for ports greater than four, said second set of CRSs are configured to be periodically transmitted in a same subframe as primary synchronisation/secondary synchronisation channels of the information channel.

2. The method of claim 1 wherein said CRSs of said first set are recognized by said next-generation standard-compliant mobile terminals.

3. The method of claim 1 wherein said second set of CRSs comprise additional common RSs defined in said next-generation standard.

4. The method of claim 1 wherein said second set of CRSs comprise additional dedicated RSs defined in said next-generation standard.

5. The method of claim 1 wherein said legacy standard is LTE Rel-8.

6. The method of claim 1 wherein said next-generation standard is LTE-A.

7. The method of claim 1 wherein said information channel is the PDCCH channel defined in the LTE-Rel-8 and LTE-A standards.

8. A base station (14) operating in a cellular network supporting both legacy standard-compliant mobile terminals and next generation standard-compliant mobile terminals (16), the base station comprising:
a processor (22) configured to perform the method of any of the claims 1 to 7.

## Patentansprüche

1. Ein Verfahren zum Betreiben eines MIMO(Multiple Input Multiple Output)-Übertragungsgeräts (14, 15) in einem Mobilfunknetz, das sowohl ältere standardkonforme mobile Endgeräte als auch standardkonforme mobile Endgeräte (16) der nächsten Generation unterstützt, wobei die älteren standardkonformen mobilen Endgeräte MIMO niedriger Ordnung und die standardkonformen mobilen Endgeräte der nächsten Generation MIMO hoher Ordnung unterstützen, wobei MIMO niedriger Ordnung vier oder weniger Antennenanschlüsse aufweist und MIMO hoher Ordnung mehr als vier Antennenanschlüsse aufweist, wobei das Verfahren Folgendes beinhaltet:
Definieren einer Matrix von Ressourcenblöcken innerhalb eines Informationskanals des Mobilfunknetzes, wobei jeder Ressourcenblock einem Bereich von Teilträgern eines Übertragungszeitschlitzes bei einem gegebenen Frequenzteilband entspricht;
Zuteilen eines ersten Satzes von zellenspezifischen Referenzsignalen, CRSs, für die älteren standardkonformen mobilen Endgeräte zu Ressourcenblöcken an spezifischen Standorten innerhalb der Matrix, die von dem MIMO-Übertragungsgerät übertragen werden sollen, wobei die spezifischen Standorte durch den älteren Standard definiert sind; und
Zuteilen eines zweiten Satzes von CRSs für die mobilen Endgeräte der nächsten Generation zu anderen Ressourcenblöcken innerhalb der Matrix, die von dem MIMO-Übertragungsgerät übertragen werden sollen; und
**dadurch gekennzeichnet, dass**
für alle Antennenanschlüsse oder für mehr als vier Anschlüsse der zweite Satz von CRSs konfiguriert ist, um periodisch in einem gleichen Teilrahmen wie primäre Synchronisationskanäle/sekundäre Synchronisationskanäle des Informationskanals übertragen zu werden.

2. Verfahren gemäß Anspruch 1, wobei die CRSs des ersten Satzes von den standardkonformen mobilen Endgeräten der nächsten Generation erkannt werden.

3. Verfahren gemäß Anspruch 1, wobei der zweite Satz von CRSs zusätzliche gemeinsame RSs beinhaltet, die in dem Standard der nächsten Generation definiert sind.

4. Verfahren gemäß Anspruch 1, wobei der zweite Satz von CRSs zusätzliche dedizierte RSs beinhaltet, die in dem Standard der nächsten Generation definiert sind.

5. Verfahren gemäß Anspruch 1, wobei der ältere Standard LTE Rel-8 ist.

6. Verfahren gemäß Anspruch 1, wobei der Standard der nächsten Generation LTE-A ist.

7. Verfahren gemäß Anspruch 1, wobei der Informationskanal der in den Standards LTE-Rel-8 und LTE-A definierte PDCCH-Kanal ist.

8. Eine Basisstation (14), die in einem Mobilfunknetz betrieben wird, das sowohl ältere standardkonforme mobile Endgeräte als auch standardkonforme mobile Endgeräte (16) der nächsten Generation unterstützt, wobei die Basisstation Folgendes beinhaltet:
einen Prozessor (22), der konfiguriert ist, um das Verfahren gemäß einem der Ansprüche 1 bis 7 durchzuführen.

## Revendications

1. Un procédé de fonctionnement d'un émetteur MIMO (14, 15) dans un réseau cellulaire supportant à la fois des terminaux mobiles conformes à une norme ancienne et des terminaux mobiles conformes à une norme de nouvelle génération (16), dans lequel les terminaux mobiles conformes à une norme ancienne supportent un MIMO d'ordre faible et les terminaux mobiles conformes à une norme de nouvelle génération supportent un MIMO d'ordre élevé, le MIMO d'ordre faible ayant quatre ports d'antenne ou moins et le MIMO d'ordre élevé ayant plus de quatre ports d'antenne, ledit procédé comprenant :
la définition d'une matrice de blocs de ressources au sein d'un canal d'information dudit réseau cellulaire, chaque bloc de ressources correspondant à une région de sousporteuses d'un intervalle de temps de transmission au niveau d'une sous-bande de fréquence donnée ;
l'assignation d'un premier ensemble de signaux de référence propres à une cellule, CRS, pour lesdits terminaux mobiles conformes à une norme ancienne à des blocs de ressources au niveau d'emplacements spécifiques au sein de ladite matrice pour qu'ils soient transmis par ledit émetteur MIMO, lesdits emplacements spécifiques étant définis par ladite norme ancienne ; et
l'assignation d'un deuxième ensemble de CRS pour lesdits terminaux mobiles conformes à une norme de nouvelle génération à d'autres blocs de ressources au sein de ladite matrice pour qu'ils soient transmis par ledit émetteur MIMO ; et
**caractérisé en ce que**,
pour tous les ports d'antenne ou pour les ports en nombre supérieur à quatre, ledit deuxième ensemble de CRS est configuré pour qu'ils soient transmis périodiquement dans une même sous-trame que des canaux de synchronisation principaux/de synchronisation secondaires du canal d'information.

2. Le procédé de la revendication 1 dans lequel lesdits CRS dudit premier ensemble sont reconnus par lesdits terminaux mobiles conformes à une norme de nouvelle génération.

3. Le procédé de la revendication 1 dans lequel ledit deuxième ensemble de CRS comprend des signaux de référence, RS, communs supplémentaires définis dans ladite norme de nouvelle génération.

4. Le procédé de la revendication 1 dans lequel ledit deuxième ensemble de CRS comprend des RS dédiés supplémentaires définis dans ladite norme de nouvelle génération.

5. Le procédé de la revendication 1 dans lequel ladite norme ancienne est la LTE Rel-8.

6. Le procédé de la revendication 1 dans lequel ladite norme de nouvelle génération est la LTE-A.

7. Le procédé de la revendication 1 dans lequel ledit canal d'information est le canal PDCCH défini dans les normes LTE Rel-8 et LTE-A.

8. Une station de base (14) fonctionnant dans un réseau cellulaire supportant à la fois des terminaux mobiles conformes à une norme ancienne et des terminaux mobiles conformes à une norme de nouvelle génération (16), la station de base comprenant :
un processeur (22) configuré pour mettre en œuvre le procédé selon n'importe lesquelles des revendications 1 à 7.
